# EUROPÄISCHE PATENTSCHRIFT

(11) **EP 4 260 011 B1**
(45) Veröffentlichungstag und Bekanntmachung des Hinweises auf die Patenterteilung: **25.03.2026**
(21) Anmeldenummer: 21806209.9
(22) Anmeldetag: 04.11.2021
(51) Int. Cl.: G01C 21/34, G01C 21/36, B60L 58/13

(54) **VERFAHREN UND VORRICHTUNG ZUR REICHWEITENKONTROLLE FÜR EIN BATTERIEBETRIEBENES KRAFTFAHRZEUG**
METHOD AND DEVICE FOR CONTROLLING THE RANGE OF A BATTERY-OPERATED MOTOR VEHICLE
PROCÉDÉ ET DISPOSITIF POUR COMMANDER L'AUTONOMIE D'UN VÉHICULE À MOTEUR SUR BATTERIE

(30) Priorität: 10.12.2020 DE 102020215678
(43) Veröffentlichungstag der Anmeldung: 18.10.2023
(73) Patentinhaber: Volkswagen Aktiengesellschaft, 38436 Wolfsburg (DE)
(72) Erfinder: STRUHS, Stefan, 38118 Braunschweig (DE); NEUMANN, Markus, 38533 Vordorf (DE); KRIEGER, Wjatscheslaw, 10115 Berlin (DE); EISNER, Ann-Kathrin, 38550 Isenbüttel (DE); WURM, Christian, 13597 Berlin (DE)
(86) Internationale Anmeldenummer: PCT/EP2021/080604
(87) Internationale Veröffentlichungsnummer: WO 2022/122258

(56) Entgegenhaltungen:
- DE-A1- 102010 040 125
- DE-A1- 102018 203 392
- DE-A1- 102018 209 997
- DE-A1- 102018 215 722
- DE-A1- 102019 101 094
- US-A1- 2017 030 728

## Beschreibung

Die Erfindung betrifft ein Verfahren und eine Vorrichtung zur Reichweitenkontrolle für ein batteriebetriebenes Kraftfahrzeug.

Relativ geringe Reichweite und geringe Dichte von Ladestationen erfordern vom Benutzer eines batteriebetriebenen Kraftfahrzeugs regelmäßig eine sorgfältige Routenplanung inklusive Zwischenstopps, um ein entfernt liegendes Navigationsziel zu erreichen.

Daher existieren für batteriebetriebene Kraftfahrzeuge Reichweitenkontrollsysteme bzw. Reichweitenmanagementsysteme, häufig integriert in Navigationssystemen, welche eine Navigationsroute zu einem Navigationsziel über Ladezwischenstopps automatisch bestimmen. Ferner sind zahlreiche Überwachungssysteme und Anzeigesysteme bekannt, um den Ladezustand der Batterie an den Benutzer zu übermitteln.

In der DE 10 2019 204217 A1 wird ein Verfahren zum Anzeigen der Reichweite für ein batteriebetriebenes Kraftfahrzeug beschrieben. Dabei werden eine minimale und eine maximale Reichweite auf Basis eines Ladezustands der Batterie ermittelt und in einer graphischen Darstellung visualisiert. Dann wird ein veränderbares, graphisches Reichweitenobjekt erzeugt, welches sich von dem Fahrzeugobjekt in Richtung des Zielobjekts erstreckt, wobei das graphische Reichweitenobjekt wenigstens einen ersten Abschnitt, der sich von dem Fahrzeugobjekt bis zu einem die minimale Reichweite repräsentierenden Bereich des Reichweitenobjektes erstreckt, und einen zweiten Abschnitt, der sich vom ersten Abschnitt bis zu einem die maximale Reichweite repräsentierende Ende des Reichweitenobjektes erstreckt, umfasst.

In der DE 10 2013 216 635 A1 wird eine Navigationseinrichtung beschrieben, welche dazu eingerichtet ist, zu ermitteln, ob eine Energiemenge eines Energiespeichers ausreicht, um ein Navigationsziel zu erreichen und auf Basis des Ergebnisses eine Route auf einer Karte darzustellen. Insbesondere werden die erfasste Energiemenge und die am Ziel vorhandene Energiemenge auf einer Anzeigevorrichtung in Form von Balkendiagrammen angezeigt.

In der DE 10 2008 035 460 A1 wird ein Verfahren zur Anzeige eines Betriebsmittelvorrats vorgeschlagen, bei dem ein aktueller Füllstandwert des Betriebsmittelvorrats und ein zugehöriger Fahrstreckenpunkt sowie ein zukünftiger Füllstandwert des Betriebsmittelvorrats und ein zugehöriger Fahrstreckenpunkt dargestellt wird. Dem Benutzer kann so ein Verlauf von Füllstandwerten für die zukünftigen Kilometer angezeigt werden.

Die US 2016/0363456 A1 zeigt ein Navigationsroutenmanagementsystem mit einer Berechnungseinheit, welche dazu eingerichtet ist, einen Energieverbrauch für eine Route zu berechnen und diesen Energieverbrauch zu korrigieren auf Basis von erhaltenen Sensordaten, wobei ferner die Fahrstrecke graphisch dargestellt wird.

In der US 2017/0030728 A1 wird ein Verfahren gezeigt, in welchem ein Ladezustand eines Energiespeichers und Routeninformationen zu einer geplanten Route für das Kraftfahrzeug erhalten werden. Unter anderem auf Basis dieser Größen wird ein Energiegehalt als Funktion der Distanz bestimmt.

In der DE 10 2016 217 087 A1 wird ein Lade-Fahr-Assistent für Elektrofahrzeuge beschrieben, welcher eine schnellste Route unter Berechnung einer Ladestrategie bestimmt.

In der US 2019/0186932 A1 wird ein Verfahren zum Bereitstellen von Hinweisen an den Fahrer offenbart, in welchem basierend auf einem Erfordernis zum Aufladen einer Batterie wenigstens ein *Point of Interest* auf der Strecke bestimmt wird, bei welchem sich eine Ladestation befindet und bei welchem ein Ladezustand mit Sicherheitsreserve vorgegeben wird.

In der DE 10 2019 130 058 A1 wird ein Verfahren zum Betrieb eines Kraftfahrzeugs beschrieben, in welchem die Gesamtzeit zum Zielort durch Bestimmen einer Sollgeschwindigkeit minimiert wird.

In der DE 10 195 19 107 C1 wird eine Fahrtroutenratgebereinrichtung vorgeschlagen, bei welcher Zwischenaufenthalte zur Energieeinspeisung zu einem gewünschten Zielort vorgeschlagen werden.

In der DE 10 2018 215 722 A1 wird ein Verfahren für ein Fahrzeug beschrieben, bei welchem eine Eingabe über ein Routenziel und eine vorzuhaltende Restenergiemenge am Routenziel bei der Bestimmung einer Navigationsroute berücksichtigt werden.

In der DE 10 2019 101 094 A1 wird ein Verfahren zur Routenplanung beschrieben, bei welchem Geschwindigkeiten für verschiedene Fahrabschnitte auf Basis von Energieprognosen bestimmt werden.

Der DE 10 2018 203 392 A1 wird ein Fahrassistenzverfahren zum Planen einer Routengestaltung eines Elektrokraftfahrzeugs beschrieben mit einem oder mehreren Ladestopps an Ladestationen, wobei Zielort und optional Startzeit, Ankunftszeit oder gewünschte Restreichweite im Ziel eingegeben werden können.

In der US 2017/030728 A1 wird ein Verfahren beschrieben, bei welchem in einem Fall, dass das Fahrzeug nicht genügend Energie für das Erreichen eines Fahrziels hat, eine Warnung übermittelt wird und der Fahrer daraufhin die Möglichkeit hat einen ihn vorbekannten Ladepunkt einzugeben, wobei das System eine Ladungsmenge am Ladepunkt auf Basis einer vom System vorgegebenen Restenergie am Fahrziel ermittelt.

In der DE 10 2018 209997 A1 und der DE 10 2010 040125 A1 werden weiter Verfahren zur Navigation gemäß dem Stand der Technik beschrieben.

Automatische Ladestoppplanung orientiert sich typischerweise an Standardeinstellungen oder Maximaleinstellungen des Benutzers, welcher den zu erzielenden Ladezustand an dem jeweiligen Ladezwischenstopp festlegt. Dies hat jedoch folgende Nachteile: Beispielsweise kann es an dem Ladezwischenstopp zu unnötig langen Ladezeiten kommen, wenn eine zu hohe Ladeeinstellung, also ein zu hoher Soll-Ladezustand, gewählt wurde. In Fällen, in welchen eine zu geringe Ladeeinstellung gewählt ist, also ein zu geringer Soll-Ladezustand, müssen zu viele Ladezwischenstopps durchgeführt werden. In beiden Fällen sind zeitliche Ineffizienzen eine negative Folge solcher festen Benutzereinstellungen.

Ferner sind Navigationsplanung und Fahrzeugeinstellungen bisher voneinander unabhängig. Das bedeutet, dass die Navigationsplanung bisher keine Anpassung der Reichweite am Navigationsziel ermöglicht.

Für Benutzer, welche nicht über eine heimische Wallbox oder eine geeignete Steckdose zum Laden der Batterie verfügen, ist es zusätzlich zu den oben beschriebenen Problemen erforderlich, auch die Folgefahrt nach Ankunft am Navigationsziel in die Routenplanung miteinzubeziehen.

Aktuell werden Ladeeinstellungen und Planung von Ladestopps manuell von dem Benutzer eingestellt. Manuelle Anpassung und Planung sind jedoch nicht nutzerfreundlich und können zu Fehlkalkulationen führen. Insbesondere ist der nicht-lineare Zusammenhang von Reichweite und Ladezustand von Batterien sowie deren Abhängigkeit von weiteren Einflussfaktoren für den Benutzer kaum kalkulierbar.

Der Erfindung liegt nun die Aufgabe zugrunde, ein Verfahren zur Reichweitenkontrolle bereitzustellen, welches die oben genannten Probleme zumindest teilweise löst und dem Benutzer sowohl auf der Fahrstrecke als auch über die Planung des Navigationsziels hinaus eine Reichweitensicherheit bietet.

In bevorzugter Ausgestaltung der Erfindung ist ein Verfahren zur Reichweitenkontrolle für ein batteriebetriebenes Kraftfahrzeug gemäß Anspruch 1 vorgeschlagen.

Das Erfassen kann hierbei mittels einer Benutzereingabe erfolgen, zum Beispiel als Texteingabe oder Spracheingabe. Die Zielrestreichweite ist mit anderen Worten eine Reichweite des Kraftfahrzeugs bzw. der Batterie, welche das Kraftfahrzeug am Navigationsziel für eine Folgefahrt aufweist bzw. aufweisen soll. Das Navigationsziel kann ein Endziel einer Fahrt sein oder aber auch ein definiertes Zwischenziel einer Route. Das Verfahren umfasst die Bestimmung mindestens eines Ladezwischenstopps, insbesondere zwei, drei, vier, fünf oder mehr als fünf Ladezwischenstopps abhängig von der Strecke, d.h. der Distanz, zum Navigationsziel. Mit anderen Worten umfasst die bestimmte Navigationsroute bestimmte Ladezwischenstopps und zugehörige, bestimmte, zu erreichende Mindestladezustände. Ein Ladezustand kann bevorzugt ein State of Charge (SoC) sein, beispielsweise in Prozent ausgedrückt. In anderen Varianten können auch Absolutwerte für den Ladezustand verwendet werden, welche den Ladezustand charakterisieren. Wenn mehrere Ladezwischenstopps ermittelt sind, so kann jedem Ladezwischenstopp ein jeweiliger zu erreichender Mindestladezustand zugewiesen werden bzw. bestimmt werden. Diese können sich demnach von Ladezwischenstopp zu Ladezwischenstopp unterscheiden. Das Kraftfahrzeug kann ein rein elektrisch betriebenes Kraftfahrzeug sein, wobei in anderen Ausführungen das Kraftfahrzeug ein Plug-In-Hybrid sein kann. Ladezwischenstopps können entsprechend automatisch berücksichtigt werden. Zudem können Ladevoreinstellungen vorgenommen werden und/oder durch Benutzereingabe Zwischenziele erfasst werden, welche von der Navigationsroute erreicht werden sollen.

Die Erfindung hat den Vorteil, dass eine Navigationsroute mit Ladezwischenstopps und Mindestladezuständen bestimmt wird, welche am Zielort eine verlangte Restreichweite garantiert. Unnötig lange Ladezeiten oder unnötige Ladezwischenstopps können somit vermieden werden. Der Benutzer muss ferner keine Restreichweite von sich aus einplanen, sondern kann sich an die Vorgaben, d.h. an die Ladezwischenstopps und die zugehörigen, zu erreichenden Mindestladezustände, halten. Dann ist sichergestellt, dass der Benutzer nicht nur das Navigationsziel erreicht, sondern auch eine vorgegebene Restreichweite am Navigationsziel zur Verfügung hat. Dies hat wiederum den Vorteil, dass für eine Folgefahrt mindestens eine definierte Reichweite vorliegt und der Benutzer nicht sofort eine nächstgelegene Ladestation aufsuchen muss. Zwischen dem Ladezustand und der Reichweite besteht eine nicht-lineare Beziehung, welche von der vorliegenden Erfindung genutzt wird, um mittels Einstellung der Mindestladezustände an den Ladezwischenstopps die geforderte Reichweite am Navigationsziel zu erreichen. Weitere bevorzugte Ausgestaltungen der Erfindung ergeben sich aus den übrigen, in den Unteransprüchen genannten Merkmalen.

Bevorzugt umfasst das Verfahren das Bestimmen der Navigationsroute zum Navigationsziel derart, dass das Kraftfahrzeug bei Erreichen des Navigationsziels eine Restreichweite aufweist, welche mit der erfassten Zielrestreichweite übereinstimmt. Das Übereinstimmen ist insofern bevorzugt, als dass so eine Navigationsroute mit Zwischenstopps und Mindestladezuständen bereitgestellt wird, welche ferner die Ladezeiten minimiert.

In bevorzugter Ausführungsform umfasst das Verfahren das Bestimmen des zu erreichenden Mindestladezustands an dem mindestens einen Ladezwischenstopp auf Basis einer Strecke zu einem nächsten Ladezwischenstopp oder zum Navigationsziel. Eine Strecke ist hierbei mit anderen Worten eine Fahrstrecke. Die Distanz zum nächsten Ladezwischenstopp ist maßgeblich für den zu erreichenden Mindestladezustand. Die besagten Strecken können auch zur Bestimmung der zu verwendenden Ladezwischenstopps herangezogen werden.

Bevorzugt umfasst das Verfahren das Bestimmen des zu erreichenden Mindestladezustands auf Basis einer Ladegeschwindigkeit an dem mindestens einen Ladezwischenstopp. Hintergrund ist hierbei, dass die Ladegeschwindigkeit an verschiedenen Ladestationen sehr unterschiedlich sein kann. Somit kann eine effektive Fahrzeitminimierung erfolgen, wenn beispielsweise an Ladestationen mit geringer Ladegeschwindigkeit nur kurz verweilt wird im Vergleich zu Ladestation mit hoher Ladegeschwindigkeit, bei welcher ein hoher Mindestladezustand bei kurzer Ladezeit erzielt werden kann. Durch diese Abhängigkeit kann eine Zeitoptimierung stattfinden und die Navigationsroute kann so eine effektive, schnellere Fahrstrecke bereitstellen. Die besagte Ladegeschwindigkeit kann auch zur Bestimmung der zu verwendenden Ladezwischenstopps herangezogen werden.

In bevorzugter Ausführungsform umfasst das Verfahren das Bestimmen des zu erreichenden Mindestladezustands auf Basis eines Energieverbrauchs. Energieverbrauch ist mit anderen Worten eine Entladegeschwindigkeit der Batterie während Nutzung. Dieser hängt stark von der Fahrweise und vielen anderen Einflussfaktoren wie Wind, Temperatur etc. ab. Durch Ermittlung des Energieverbrauchs kann diese Größe zur Bestimmung der Mindestladezustände herangezogen werden. Der besagte Energieverbrauch kann auch zur Bestimmung der zu verwendenden Ladezwischenstopps herangezogen werden.

Bevorzugt umfasst das Verfahren das Bestimmen einer Ladezeit bis zum Erreichen des Mindestladezustands an dem mindestens einen Ladezwischenstopp auf Basis der Ladegeschwindigkeit am Ladezwischenstopp, eines ermittelten Ankunftsladezustands und des zu erreichenden Mindestladezustand an dem mindestens einen Ladezwischenstopp. Die Ladezeit kann für den Benutzer bedeutsam sein, um die effektive Fahrzeit planen zu können oder auch um die Wartezeit oder Verweilzeit einteilen zu können.

In bevorzugter Ausführungsform umfasst das Verfahren das Anzeigen der Ladezeit und/oder des Ankunftsladezustands und/oder des zu erreichenden Mindestladezustands an dem mindestens einen Ladezwischenstopp auf einem Display. Dadurch kann der Benutzer einerseits umfänglich informiert werden und zudem kann er sein Fahrverhalten entsprechend anpassen, wenn zum Beispiel geringe Ankunftsladezustände an Zwischenstopps angezeigt werden. Die Ladezeit ist ferner hilfreich für die effektive Fahrzeitberechnung.

Das Verfahren umfasst das Darstellen einer graphischen Ladeanzeige auf einem Display während des Ladevorgangs an dem mindestens einen Ladezwischenstopp, wobei die Ladeanzeige ein bewegliches Ladezustandsobjekt indikativ für den Ist-Ladezustand der Batterie und ein Ladezielobjekt indikativ für den zu erreichenden Mindestladezustand umfasst. Dadurch wird dem Benutzer anschaulich visualisiert, wann er den bestimmten Mindestladezustand erreicht. Der zu erreichende Mindestladezustand überschreibt bzw. überstimmt ferner eventuelle Ladevoreinstellungen des Benutzers.

In bevorzugter Ausführungsform umfasst das Verfahren das Übermitteln eines Signals indikativ für das Erreichen des zu erreichenden Mindestladezustands an dem mindestens einen Ladezwischenstopp an ein mobiles Endgerät. Dadurch muss der Benutzer den Ladevorgang während des Ladens nicht selber überwachen und muss nicht am Kraftfahrzeug verweilen, sondern kann sich auch beispielsweise von der Ladesäule entfernen. Das mobile Endgerät ist beispielsweise ein Tablet, ein Mobiltelefon, ein Laptop etc. Beispielsweise kann eine Fahrzeugapplikation mit Fahrzeugverbindung bereitgestellt werden.

Bevorzugt umfasst das Verfahren das Erfassen einer zu erreichenden Ladestopprestreichweite an dem mindestens einen Ladezwischenstopp und das Bestimmen der Navigationsroute derart, dass das Kraftfahrzeug an dem mindestens einen Ladezwischenstopp eine Restreichweite aufweist, welche mindestens der erfassten Ladestopprestreichweite entspricht. Auch hier ist eine Übereinstimmung von zu erreichender Ladestopprestreichweite und Restreichweite am Ladezwischenstopp besonders bevorzugt. Der Benutzer hat somit an den automatisch eingeplanten Zwischenladestopps einen Sicherheitspuffer an Reichweite. Die Ladestopprestreichweite ist hierbei definiert als die Reichweite bei Ankunft an der Ladestation, d.h. vor dem Laden. Die Navigationsroute und die Mindestladezustände an dem bzw. den vorherigen Ladezwischenstopps werden dann so berechnet, dass auch an den Ladestopps die erfasste Ladestopprestreichweite erfüllt wird. Dadurch wird Sicherheit für den Benutzer geschaffen, da das Erreichen der Ladestopps mit genügend Ankunftsladezustand gewährleistet wird. Bevorzugt ist die erfasste Ladestoppreichweite an allen Ladestopps gleich. Knapp ausgelegte Navigationsrouten mit sehr geringen Ankunftsladezuständen können somit gänzlich vermieden werden.

Das Verfahren umfasst das Erfassen eines zusätzlichen Ladezwischenstopps, und das Bestimmen der Navigationsroute ferner über den zusätzlichen Ladezwischenstopp unter Bestimmung eines zu erreichenden Mindestladezustands an dem zusätzlichen Ladezwischenstopp derart, dass das Kraftfahrzeug bei Erreichen des Navigationsziels eine Restreichweite aufweist, welche mindestens der erfassten Zielrestreichweite entspricht. Ein solcher zusätzlicher Zwischenstopp kann auch als manueller Zwischenstopp bezeichnet werden. Dies ist ein Ladezwischenstopp, welcher nicht automatisch eingeplant wird. Der Benutzer kann demnach weiter Ladezwischenstopps nach seinen Präferenzen, zum Beispiel für Mittagspausen, einbeziehen. Die Navigationsroute wird entsprechend neu bestimmt, beispielsweise mittels neuer Ladezwischenstopps und/oder neuer Mindestladezustände, sodass die geforderte Restreichweite am Navigationsziel und/oder die Ladestopprestreichweiten an den Ladezwischenstopps wieder erfüllt sind. Dadurch ist das Verfahren adaptiv und robust gegenüber solchen manuellen Zwischenstopps, ohne dass sich die Restreichweite am Navigationsziel ändert.

Bevorzugt umfasst das Verfahren das zeitkontinuierliche Bestimmen der Navigationsroute oder das Bestimmen der Navigationsroute nach bestimmten Zeitabständen. Dadurch ist die Navigationsroute adaptiv und anpassbar. Beispielsweise können sich ändernde Parameter, zum Beispiel der Energieverbrauch, oder auch zusätzliche vom Benutzer manuell geplante Zwischenstopps zu einer neuen Bestimmung oder auch Neuplanung der Navigationsroute führen, wobei die erfasste Zielrestreichweite erreicht wird.

In bevorzugter Ausführungsform umfasst das Verfahren das Bestimmen der Navigationsroute zum Navigationsziel auf Basis des Ladezustands der Batterie. Der Ladezustand, insbesondere bei Erfassung des Navigationsziels und Restreichweite, beeinflusst beispielsweise die Bestimmung des ersten Ladezwischenstopps.

In einem weiteren Aspekt der Erfindung wird eine Vorrichtung zur Reichweitenkontrolle für ein Kraftfahrzeug vorgeschlagen, wobei die Vorrichtung dazu eingerichtet ist, das Verfahren gemäß einer der Ausführungsformen auszuführen. Die Vorrichtung, bevorzugt eine Navigationsvorrichtung, kann insbesondere eine Steuereinheit umfassen, welche die Verfahrensschritte ausführt.

In einem weiteren Aspekt der Erfindung wird ein Kraftfahrzeug vorgeschlagen mit einer oben beschriebenen Vorrichtung zur Reichweitenkontrolle. Das Kraftfahrzeug ist insbesondere ein batteriebetriebenes Kraftfahrzeug, beispielsweise ein Plug-In-Hybrid oder ein rein elektrisches Kraftfahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Kraftfahrzeug mit einer Vorrichtung zur Reichweitenkontrolle gemäß einer Ausführungsform der Erfindung;
- Figur 2: eine Eingabeschnittstelle gemäß einer Ausführungsform der Erfindung;
- Figur 3: eine Illustration einer bestimmten Navigationsroute nach einer ersten Ausführungsform der Erfindung;
- Figur 4: eine Illustration einer bestimmten Navigationsroute nach einer zweiten Ausführungsform der Erfindung;
- Figur 5: eine Illustration einer bestimmten Navigationsroute nach einer dritten Ausführungsform der Erfindung;
- Figur 6: eine Navigationsroutenanzeige nach einer ersten Ausführungsform der Erfindung;
- Figur 7: eine Navigationsroutenanzeige nach einer zweiten Ausführungsform der Erfindung; und
- Figur 8: eine Ladeanzeige nach einer Ausführungsform der Erfindung.

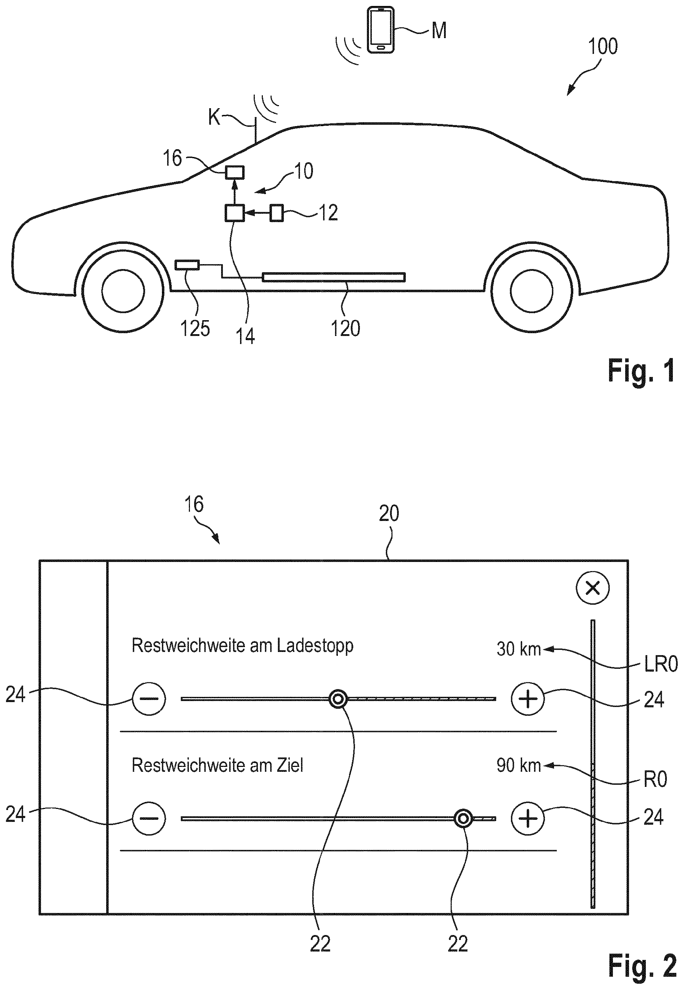

Figur 1 zeigt ein Kraftfahrzeug 100 und eine Vorrichtung 10 zur Reichweitenkontrolle. Die Vorrichtung 10 zur Reichweitenkontrolle kann hierbei in dem Kraftfahrzeug 100 bereitgestellt bzw. integriert sein. Das Kraftfahrzeug 100 kann ferner eine Batterie 120 umfassen, beispielsweise im Bodenbereich des Kraftfahrzeugs 100. Ferner ist schematisch ein Elektromotor 125, bzw. eine Elektromaschine, vorgesehen. Die Batterie 120 des Kraftfahrzeugs 100 ist ladbar, d.h. die Batterie 120 kann über eine Ladestation aufgeladen werden.

Das Kraftfahrzeug 100 kann ferner einen Sensor 12 umfassen, bzw. eine Sensorgruppe oder eine Sensorik. Der Sensor 12 kann dazu eingerichtet sein, einen Energieverbrauch und/oder den Ladezustand der Batterie 120 oder auch andere relevante Überwachungsparameter der Batterie 120 zu erfassen. Ferner können auch Positionsdaten des Kraftfahrzeugs 100 erfasst werden. Die Vorrichtung 10 zur Reichweitenkontrolle kann die ermittelten Sensorwerte von dem Sensor 12 erhalten bzw. dann auch verarbeiten.

Eine Steuereinheit 14 der Vorrichtung 10 kann dazu eingerichtet sein, Navigationsrouten über Ladezwischenstopps in Kombination mit Mindestladezuständen an den Ladezwischenstopps unter der Forderung einer vorgegebenen Zielrestreichweite an dem Navigationsziel zu bestimmen. Dies wird in den unteren Ausführungsformen näher beschrieben. Für diese Bestimmung können entsprechende digitale Karten und hinterlegte Navigationsdaten umfassend zum Beispiel Ladezwischenstopps, und bevorzugt auch deren Ladegeschwindigkeiten, bereitgestellt werden, auf welche die Steuereinheit 14 zurückgreifen kann. Die Steuereinheit 14 ist ferner dazu eingerichtet, Mindestladezustände an den Ladezwischenstopps zu bestimmen, wie in den unteren Ausführungsformen näher beschrieben.

Die Steuereinheit 14 kann ferner dazu eingerichtet sein, ein Display 16 zu steuern. Das Display 16, auch Anzeigeeinrichtung genannt, kann die bestimmte Navigationsroute und weitere Informationen dazu graphisch, auf einem Bildschirm, an den Benutzer übermitteln.

Weiterhin kann das Kraftfahrzeug 100 eine Kommunikationsschnittstelle K umfassen, um mit einem mobilen Endgerät M Signale auszutauschen.

Ferner umfasst die Vorrichtung 10 mindestens eine Schnittstelle, d.h. insbesondere eine Eingabeschnittstelle, sodass Eingaben des Benutzers von der Steuereinheit 14 erfasst werden können. Beispielsweise kann eine solche Schnittstelle durch ein berührungssensitives Display 16 realisiert werden, wobei die Erfindung nicht darauf beschränkt ist. Die Steuereinheit 14 kann ferner dazu eingerichtet, die im Folgenden beschriebenen Ausführungsformen der Verfahren zur Reichweitenkontrolle auszuführen.

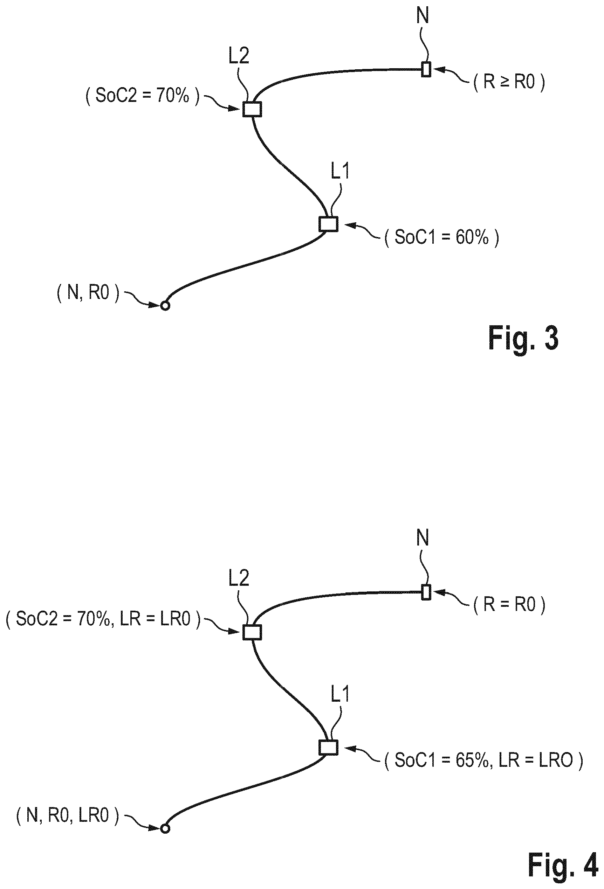

Im Folgenden werden Figur 2 und Figur 3 zur Illustration des erfindungsgemäßen Verfahrens zur Reichweitenkontrolle für ein batteriebetriebenes Kraftfahrzeug 100 näher beschrieben.

Zunächst wird ein Navigationsziel N erfasst. Dazu kann eine Schnittstelle, zum Beispiel als berührungssensitives Eingabefeld auf einem Display 16, bereitgestellt werden. Das Navigationsziel N kann beispielsweise in Form einer Zieladresse eingegeben werden. Das Navigationsziel N kann beispielsweise ein Endziel einer Fahrt oder aber auch ein definiertes Zwischenziel einer Fahrt sein.

Weiterhin wird eine Zielrestreichweite R0 erfasst, welche am Navigationsziel N von dem Kraftfahrzeug 100 bzw. der Batterie 120 zu erreichen sein soll. Mit anderen Worten ausgedrückt ist die Zielrestreichweite R0 eine gewünschte Zielrestreichweite R0 am Navigationsziel N. In der Figur 2 ist eine beispielhafte Einstellansicht 20 auf dem Display 16 zur Eingabe der Zielrestreichweite R0 angezeigt.

In diesem Ausführungsbeispiel kann mittels eines Schiebereglers 22 ein Wert für die gewünschte Zielrestreichweite R0 eingestellt werden, hier beispielhaft in Kilometern, wobei ein beispielhafter Wert von 90 km für die Zielrestreichweite R0 eingestellt ist. Ferner kann mittels eines oder mehrerer Buttons 24 die Zielrestreichweite R0 noch genauer eingestellt werden. In der vorliegenden Ausführungsform ist ferner ein Intervall an Zielrestreichweiten R0 vorgegeben. Die Erfindung ist jedoch nicht auf die spezielle Einstellungsart der Zielrestreichweite R0 beschränkt. In anderen Ausführungsformen kann beispielsweise eine Zielrestreichweite R0 auch ohne Intervallbeschränkung eingestellt oder direkt als numerische Zahl eingegeben werden.

Weiterhin kann, wie in der Figur 2 zu sehen, auch eine Ladestopprestreichweite LR0 in gleicher Weise eingestellt werden, was weiter unten näher beschrieben wird. Ferner können, hier nicht ausdrücklich gezeigt, Ladezwischenstopps automatisch berücksichtigt werden. Zudem können Ladevoreinstellungen vorgenommen werden und/oder Zwischenziele durch Benutzereingabe erfasst werden, welche von der Navigationsroute erreicht werden sollen.

In einem weiteren Schritt, wie in der Figur 3 beispielhaft illustriert, wird eine Navigationsroute zum Navigationsziel N über mindestens einen Ladezwischenstopp L1, L2 bestimmt. Dies erfolgt insbesondere dann, wenn die Strecke zum Navigationsziel N größer oder nur geringfügig kleiner als die Reichweite der Batterie 120 ist. Für jeden Ladezwischenstopp L1, L2 wird ein zu erreichender Mindestladezustand SoC1, SoC2 der Batterie 120 bestimmt. Das bedeutet mit anderen Worten, dass eine Navigationsroute bestimmt wird, welche durch Festlegung bzw. Bestimmung von bestimmten Ladezwischenstopps L1, L2 und Festlegung bzw. Bestimmung von Mindestladezuständen SoC1, SoC2 gekennzeichnet ist. Durch die Kombination von Ladezwischenstopps und Mindestladezuständen kann dann die Zielrestreichweite R0 am Navigationsziel N erreicht werden. Der Mindestladezustand SoC1, SoC2 bezeichnet hier den mindestens zu erreichenden Ladezustand am Ende des Ladevorgangs an dem jeweiligen Ladezwischenstopp L1, L2. An verschiedenen Ladezwischenstopps L1, L2 können sich die Mindestladezustände SoC1, SoC2 voneinander unterscheiden.

Die Navigationsroute über die bestimmten Ladezwischenstopps L1, L2 mit jeweiligen Mindestladezuständen SoC1, SoC2 wird dabei, von der Steuereinheit 14, so bestimmt, dass das Kraftfahrzeug 100 bei Erreichen des Navigationsziels N eine Restreichweite R aufweist, welche mindestens der erfassten Zielrestreichweite R0 entspricht. Die Navigationsroute ist mit anderen Worten so ausgelegt, dass mindestens die erfasste Zielrestreichweite R0 am Navigationsziel N zur Verfügung steht. Erzielt wird dies durch die Ladezwischenstopps L1, L2 mit zugehörigen Mindestladezuständen SoC1, SoC2. Auch mehrere Navigationsrouten können die Restreichweite R0 am Navigationsziel N erfüllen. In solchen Fällen kann der Benutzer eine Auswahl aus den verschiedenen Navigationsrouten treffen.

In der Figur 3 ist eine beispielhafte Navigationsroute zur Illustration der Erfindung auf einer stark vereinfachten Karte dargestellt. In diesem beispielhaften Fall verläuft die bestimmte Navigationsroute über zwei Ladezwischenstopps L1, L2 zu einem erfassten Navigationsziel N. An dem ersten Ladezwischenstopp L1 ist ein zu erreichender Mindestladezustand SoC1 von 60% bestimmt. An einem zweiten Ladezwischenstopp L2 ist ein Mindestladezustand SoC2 beispielhaft von 70% bestimmt. Auch hier ist betont, dass der Ladezustand auch in anderen Größen dargestellt werden kann. Diese Navigationsroute, d.h. umfassend die bestimmten Ladezwischenstopps L1, L2 und die zugehörigen, bestimmten Mindestladezustände SoC1, SoC2, sichert eine Restreichweite R am Navigationsziel. Am Navigationsziel N wird dann bei Einhalten der bestimmten Ladezwischenstopps und Mindestladungszustände SoC1, SoC2 eine Restreichwerte R erzielt, welche mindestens der eingegebenen Restreichweite R0 entspricht. Dadurch wird die Zahl der Ladestopps und Ladezeiten reduziert und der Fahrer in der Planung hinsichtlich der Folgefahrten entlastet.

In dem vorliegenden Beispiel und in bevorzugten Ausführungen der Erfindung ist die Navigationsroute so ausgelegt bzw. so bestimmt, dass das Kraftfahrzeug 100 bei Erreichen des Navigationsziels N eine Restreichweite R aufweist, welche mit der erfassten Zielrestreichweite R0 übereinstimmt. Dadurch hat der Benutzer genau die Restreichweite R am Navigationsziel R0 zur Verfügung, welche eingegeben bzw. erfasst wurde. Dadurch werden ferner keine unnötig langen Verweilzeiten, bzw. Ladezeiten, an einem Ladezwischenstopp L1, L2 verbracht.

Die Bestimmung der Mindestladezustände SoC1, SoC2 als auch die bestimmten Ladezwischenstopps L1, L2, d.h. die Bestimmung der Navigationsroute, können auf Basis von Einflussparametern bestimmt werden. Ein Einflussparamater ist die Strecke zum nächsten Ladezwischenstopp L1, L2 bzw. die Strecke zum Navigationsziel N, d.h. die jeweiligen Mindestladezustände an dem mindestens einen Ladezwischenstopp L1, L2.

Am Beispiel der Figur 2 muss der Mindestladezustand SoC1 derart bestimmt sein, dass das Kraftfahrzeug 100 über die Strecke zum Ladezwischenstopp L2 gelangen kann. Beispielsweise ist am Ladezwischenstopp L2 der zu erreichende Mindestladezustand SoC2 derart zu bestimmen, dass die erfasste Restreichweite R0 am Navigationsziel N erreicht werden kann. Ferner können unnötige Ladezwischenstopps durch die Bestimmung geeigneter Mindestladezustände überbrückt und somit die Anzahl der Ladezwischenstopps reduziert werden.

Ferner können die Ladezwischenstopps L1, L2 und/oder die zu erreichenden Mindestladezustände SoC1, SoC2 auf Basis einer Ladegeschwindigkeit an den Ladezwischenstopps bestimmt werden. Beispielsweise können Ladestationen bzw. Ladesäulen mit hoher Ladegeschwindigkeit für kurze Ladezeiten priorisiert werden. Ferner kann die Navigationsroute so bestimmt werden, dass wenn eine Ladestation mit geringer Ladegeschwindigkeit notwendig ist, ein möglichst geringer zu erreichenden Mindestladezustand festgelegt wird. Dadurch kann die Verweildauer zum Laden verringert werden.

Ferner kann der Energieverbrauch berücksichtigt werden, d.h. das Bestimmen des zu erreichenden Mindestladezustands und/oder der Ladezwischenstopps kann auf Basis eines Energieverbrauchs erfolgen. Beispielsweise kann für die Bestimmung ein fest vorgegebener Energieverbrauch verwendet werden. Der Energieverbrauch kann auch beispielsweise mittels Sensordaten des Sensors 12 während der Fahrt ermittelt werden. Beispielsweise kann ein weiterer Ladezwischenstopp eingeplant werden, wenn der Energieverbrauch zu hoch ist oder im umgekehrten Fall ein vormalig eingeplanter Ladezwischenstopp ausgelassen werden. Andernfalls können auch die Mindestladezustände an einem oder mehreren Ladezwischenstopps angepasst werden. Ferner kann das Bestimmen der Navigationsroute, d.h. der Ladezwischenstopps und der Mindestladezustände SoC1, SoC2, zum Navigationsziel auf Basis des Ladezustands der Batterie 120 erfolgen. Beispielsweise bestimmt der Ladezustand der Batterie insbesondere den nächsten Ladezwischenstopp.

Die Navigationsroute kann, wie bereits oben beschrieben, jederzeit angepasst werden. Die Navigationsroute kann somit, mit anderen Worten ausgedrückt, zeitkontinuierlich bestimmt werden. Beispielsweise können auch die bestimmten Mindestladezustände SoC1, SoC2 zeitkontinuierlich angepasst werden oder bestimmten Ladezwischenstopps L1, L2 geändert werden, d.h. umgeplant werden. Ferner kann das Bestimmen der Navigationsroute auch in bestimmten Zeitabständen erfolgen.

Figur 4 illustriert eine bestimmte Navigationsroute nach einer zweiten Ausführungsform der Erfindung. Im Folgenden werden nur die Unterschiede zu der obigen Darstellung beschrieben. Für gleiche Merkmale oder Definitionen wird auf obige Beschreibung verwiesen.

In dieser Ausführungsform kann das Verfahren ferner das Erfassen einer zu erreichenden Ladestopprestreichweite LR0 an dem mindestens einen Ladezwischenstopp L1, L2 umfassen, wie beispielsweise in der Figur 2 dargestellt. Das Erfassen einer Benutzereingabe kann beispielsweise mittels eines Schiebereglers 22 erfolgen. In der Figur 2 ist ein Wert von 30 km eingestellt. Ferner kann mittels Buttons 24 die Ladestopprestreichweite LR0 noch genauer eingestellt werden. Die Erfindung ist jedoch nicht auf eine solche Einstellung beschränkt. In der vorliegenden Ausführungsform ist ferner ein Intervall an Ladestopprestreichweiten LR0 vorgegeben, wobei in anderen Ausführungsformen eine Ladestopprestreichweite LR0 auch ohne Intervallbeschränkung eingestellt werden kann, beispielsweise durch Eingabe von Zahlenwerten. Bevorzugt wird diese Ladestopprestreichweite LR0 für alle Ladezwischenstopps L1, L2 gleichermaßen auferlegt. In anderen Ausführungsformen kann die Zuweisung individualisiert erfolgen.

Die Navigationsroute, wie in Figur 4 illustriert, wird zusätzlich so bestimmt, dass die Ladestopprestreichweite LR an dem mindestens einen Ladezwischenstopp L1, L2 mit der erfassten Ladestopprestreichweite LR0 übereinstimmt. Die Navigationsroute muss demnach eine weitere Bedingung erfüllen. Eine solche Ladestopprestreichweite LR0 kann für jeden der Ladezwischenstopps L1, L2 bevorzugt generell festgelegt werden, wie in der Figur 4 gezeigt. In dem vorliegenden Fall ist beispielsweise der erste zu erreichende Mindestladezustand SoC1 gegenüber der Ausführungsform in Figur 3 erhöht, um am Ladezwischenstopp L2 die geforderte Ladestopprestreichweite LR0 zu haben. Dadurch wird für jeden Ladezwischenstopp L1, L2 ein Reichweitenpuffer sichergestellt. So können eng ausgelegte Navigationsrouten ausgeschlossen werden, und der Benutzer hat eine zusätzliche Sicherheit, die nächste Ladestation zu erreichen.

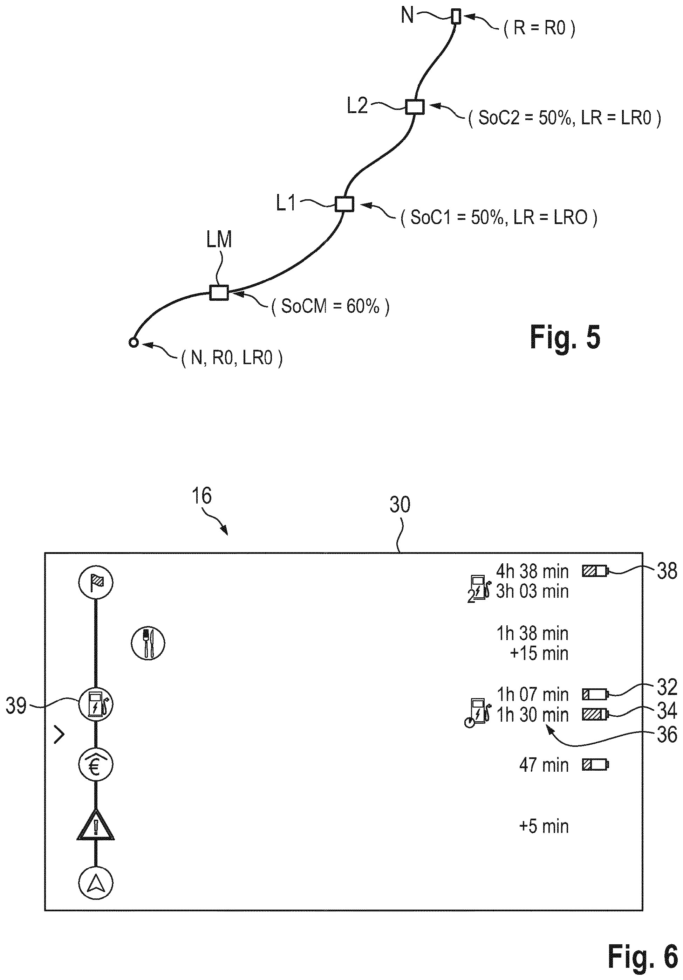

Figur 5 illustriert eine bestimmte Navigationsroute gemäß der Erfindung. Im Folgenden werden nur die Unterschiede zu den vorigen Darstellungen beschrieben. Für gleiche Merkmale oder Definitionen wird auf obige Beschreibungen verwiesen. Die Ausführungsform ist kombinierbar sowohl mit Figur 3 als auch mit Figur 4.

Gemäß der Erfindung wird ein zusätzlicher, manueller Ladezwischenstopp LM erfasst. Dieser Ladezwischenstopp LM ist manuell vom Benutzer eingegeben. In diesem Fall wird eine Navigationsroute ferner über den zusätzlichen Ladezwischenstopp LM unter Bestimmung eines zu erreichenden Mindestladezustands SoCM an dem zusätzlichen Ladezwischenstopp LM bestimmt. Die Bestimmung erfolgt derart, dass das Kraftfahrzeug 100 bei Erreichen des Navigationsziels N eine Restreichweite R aufweist, welche mindestens der erfassten Zielrestreichweite R0 entspricht.

Die Navigationsroute wird in diesem Fall neu berechnet, beispielsweise mittels neuer Ladezwischenstopps und/oder neuer Mindestladezustände, sodass die geforderte Restreichweite R0 am Navigationsziel und/oder die Ladestopprestreichweiten LR0 an den Ladezwischenstopps wieder erfüllt sind wie in der Figur 5 beispielhaft gezeigt.

In dem vorliegenden Beispiel ist am zusätzlichen Ladezwischenstopp LM ein zu erzielender Mindestladezustand von SoCM von 70% bestimmt. Durch den manuellen Ladezwischenstopp LM sind hierbei beispielhaft andere Ladezwischenstopps L1, L2 eingeplant worden. Ferner können mittels der neuen Navigationsroute auch die Ladestopprestreichweiten LR0 an den Ladezwischenstopps L1, L2 erreicht werden. Dazu war in diesem Beispiel gegenüber den Figuren 3 und 4 eine Neuplanung der Route erforderlich. Das Verfahren ist dabei derart anpassungsfähig, dass auch bei manuellen Ladezwischenstopps LM die Restreichweiten R0 bzw. LR0 erzielt werden

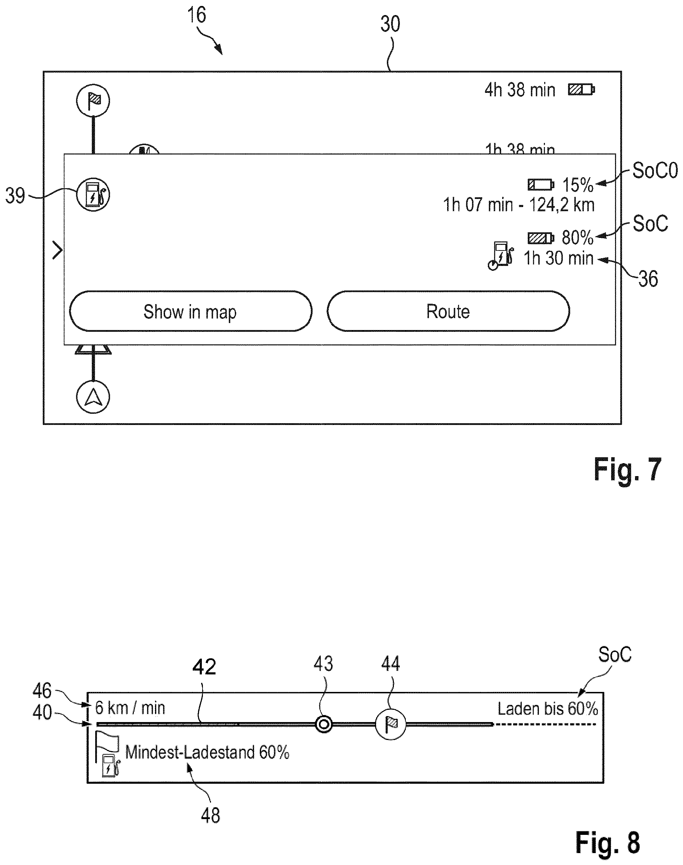

In den Figuren 6 und 7 werden Routenansichten 30 nach Ausführungsformen der Erfindung gezeigt.

In der Figur 6 wird gemäß einer ersten Ausführungsform der Erfindung eine Routenansicht 30 auf dem Display 16 für eine beispielhafte, gemäß der Erfindung bestimmte Navigationsroute gezeigt. In diesem Fall ist ein Ladezwischenstopp bestimmt, welcher als graphisches Ladestoppobjekt 39 dargestellt ist.

Ferner werden verschiedene bestimmte Ladezustände dargestellt. Beispielsweise wird ein Ankunftsladezustand 32 angezeigt. Der Ankunftsladezustand 32 ist hierbei der bestimmte Ladezustand der Batterie 120 bei Ankunft am Ladezwischenstopp. Dieser korrespondiert zu der Restreichweite am Ladezwischenstopp. Der Ankunftsladezustand 32 kann beispielsweise aus dem Energieverbrauch, der Strecke zum Ladezwischenstopp und dem aktuellen Ladezustand ermittelt werden. Ferner wird zudem ein Zielladezustand 38 bestimmt und angezeigt. Der Zielladezustand korrespondiert mit der Restreichweite R am Navigationsziel. Wie bereits zuvor beschrieben, impliziert der Ankunftsladezustand 32 und der Zielladezustand 38 die jeweiligen Restreichweiten am Ladezwischenstopp bzw. am Navigationsziel.

Ferner kann der zu erzielende Mindestladezustand als Abfahrtsladezustand 34 dargestellt werden. Ferner kann eine Ladezeit 36 dargestellt werden. Die Ladezeit 36 bis zum Erreichen des Mindestladezustands an dem mindestens einen Ladezwischenstopp kann bevorzugt auf Basis der Ladegeschwindigkeit am Ladezwischenstopp, eines ermittelten Ankunftsladezustands und des zu erreichenden Mindestladezustands an dem mindestens einen Ladezwischenstopp bestimmt werden.

In der Figur 7 wird noch detaillierter in einer beispielhaften zweiten Ausführungsform eine Routenansicht 30 auf dem Display 16 für eine beispielhafte, bestimmte Navigationsroute gemäß der Erfindung gezeigt. In dieser Ansicht wird ferner auch der Anfahrtsladezustand SoC0, hier bspw. 15%, bestimmt und angezeigt. Ferner wird auch der Mindestladezustand, hier 80%, bestimmt und angezeigt. In diesem beispielhaften Fall beträgt die Ladezeit 36 einen bestimmten Wert von 1h 30 min.

In der Figur 8 ist eine graphische Ladeanzeige 40 gemäß einer Ausführungsform der Erfindung gezeigt. Die graphische Ladeanzeige 40 ist auf einem Display 16 während des Ladevorgangs an dem mindestens einen Ladezwischenstopp L1, L2 dargestellt. Die Ladeanzeige 40 umfasst dabei ein bewegliches Ladezustandsobjekt 42, welches indikativ für einen Ist-Ladezustand der Batterie 120 ist. Ferner umfasst die Ladeanzeige 40 ein Ladezielobjekt 44, welches indikativ ist für den zu erreichenden Mindestladezustand SoC. Letzter ist in diesem Fall beispielhaft mit 60% bestimmt.

Ferner ist auch eine Ladevoreinstellung 43 des Benutzers angezeigt. Der zu erreichende Mindestladezustand SoC ist somit in diesem Fall höher als die Ladevoreinstellung 43. Der Benutzer muss somit, um die gewünschte Zielrestreichweite R0 am Navigationsziel N zu erreichen, mehr als die Ladevoreinstellung 43 laden. Der zu erreichende Mindestladezustand überschreibt bzw. überstimmt hier somit die Ladevoreinstellung des Benutzers. In anderen Fällen kann der zu erreichende Mindestladezustand SoC geringer sein als die Ladevoreinstellung 43. Dann kann der Benutzer gegenüber der Ladevoreinstellung 43 Ladezeit einsparen. Der Benutzer kann ferner die Ladegeschwindigkeit 46, hier 6 km/min, der Ladesäule überwachen. Diese Ladegeschwindigkeit 46 kann von der Ladesäule erhalten sein oder in den Navigationsdaten zusammen mit dem zugehörigen Ladezwischenstopp vorabgespeichert sein.

Weiterhein kann dem Benutzer eine Ladeinformation 48 angezeigt werden, beispielsweise in Textformat, enthaltend beispielsweise den zu erreichenden Mindestladezustand.

In einer weiteren Ausführungsform kann ein Übermitteln eines Signals indikativ für das Erreichen des zu erreichenden Mindestladezustands SoC an ein mobiles Endgerät M erfolgen. Dazu kann das Kraftfahrzeug 100 ferner eine Kommunikationsschnittstelle K aufweisen, welche eingerichtet ist, das Signal von der Steuereinheit 14 an das mobile Endgerät M zu übermitteln. Das hat den Vorteil, dass der Benutzer den Ladevorgang nicht selbständig überwachen muss bzw. nicht am Kraftfahrzeug 100 verweilen muss.

Die Erfindung hat den Vorteil, dass eine hinsichtlich der Restreichweite am Zielort optimierte Navigationsroute bestimmt wird. Der Benutzer muss somit keine Restreichweite von sich aus einplanen, sondern kann sich an die Vorgaben, d.h. an die Ladezwischenstopps und die zugehörigen zu erreichenden Mindestladezustände, halten. Dann ist sichergestellt, dass der Benutzer nicht nur das Navigationsziel erreicht, sondern auch eine vorgegebene Restreichweite am Navigationsziel oder an Ladezwischenstopps zur Verfügung hat. Dadurch werden unnötig lange Ladezeiten und unnötige Ladezwischenstopps vermieden.

### Bezugszeichenliste

- 10: Vorrichtung zur Reichweitenkontrolle
- 12: Sensor
- 14: Steuereinheit
- 16: Display

- 20: Einstellansicht
- 22: Schieberegler
- 24: Button

- 30: Routenansicht
- 32: Ankunftsladezustand
- 34: Abfahrtsladezustand
- 36: Ladezeit
- 38: Zielladezustand
- 39: Ladestoppobjekt

- 40: Ladeanzeige
- 42: bewegliches Ladezustandsobjekt
- 43: Ladevoreinstellung
- 44: Ladezielobjekt
- 46: Ladegeschwindigkeit
- 48: Ladeinformation

- 100: Kraftfahrzeug
- 120: Batterie/Energiespeicher
- 125: Elektromotor/Antrieb

- K: Kommunikationsschnittstelle
- M: mobiles Endgerät

- N: Navigationsziel
- R0: erfasste Zielrestreichweite
- R: Restreichweite

- LM: manueller Ladestopp
- LR0: erfasste Ladestopprestreichweite
- LR: Restreichweite

- L, L1, L2: Ladezwischenstopp

- SoC0: Anfahrtsladezustand
- SoC: Mindestladezustand
- SoC1, SOC2: Mindestladezustand
- SoCM: Mindestladezustand

## Patentansprüche

1. Verfahren zur Reichweitenkontrolle für ein Kraftfahrzeug (100), umfassend:
- Erfassen eines Navigationsziels (N) über eine Benutzerschnittstelle;
- Erfassen einer zu erreichenden Zielrestreichweite (R0) am Navigationsziel (N) über die Benutzerschnittstelle;
- Bestimmen einer Navigationsroute zum Navigationsziel (N) über mindestens einen Ladezwischenstopp (L1, L2) unter Bestimmung eines zu erreichenden Mindestladezustands (SoC1, SoC2) einer Batterie (120) an dem mindestens einen Ladezwischenstopp (L1, L2) durch eine Steuereinheit (14) derart, dass das Kraftfahrzeug (100) bei Erreichen des Navigationsziels eine Restreichweite (R) aufweist, welche mindestens der erfassten Zielrestreichweite (R0) entspricht;
- Steuern eines Displays (16) durch die Steuereinheit (14) zum Anzeigen der Navigationsroute auf dem Display (16);
**gekennzeichnet durch**,
- Erfassen eines zusätzlichen Ladezwischenstopps (LM) über die Benutzerschnittstelle, und das Neubestimmen der Navigationsroute durch die Steuereinheit (14) über den zusätzlichen Ladezwischenstopp (LM) unter Bestimmung eines zu erreichenden Mindestladezustands (SoC) an dem zusätzlichen Ladezwischenstopp (LM) derart, dass das Kraftfahrzeug bei Erreichen des Navigationsziels eine Restreichweite (R) aufweist, welche mindestens der erfassten Zielrestreichweite (R0) entspricht; und
- Darstellen einer graphischen Ladeanzeige (40) auf dem Display (16) während des Ladevorgangs an dem mindestens einen Ladezwischenstopp (L1, L2) oder dem zusätzlichen Ladezwischenstopp (LM), wobei die Ladeanzeige (40) ein bewegliches Ladezustandsobjekt (42) indikativ für den Ist-Ladezustand der Batterie (120) und ein Ladezielobjekt (44) indikativ für den zu erreichenden Mindestladezustand (SoC) umfasst,
- wobei die graphische Ladeanzeige (40) ferner ein Objekt indikativ für eine Ladevoreinstellung (43) des Benutzers umfasst, wobei das Objekt indikativ für die Ladevoreinstellung (43) zusammen mit dem Ladezielobjekt (44) indikativ für den zu erreichenden Mindestladezustand (SoC) während des Ladevorgangs auf einem Strahl gemäß ihrem SoC-Wert geordnet dargestellt ist und das bewegliche Ladezustandsobjekt (42) sich entlang des Strahls bewegt.

2. Verfahren nach Anspruch 1, **gekennzeichnet durch** das Bestimmen der Navigationsroute zum Navigationsziel (N) durch die Steuereinheit (14) derart, dass das Kraftfahrzeug (100) bei Erreichen des Navigationsziels eine Restreichweite (R) aufweist, welche mit der erfassten Zielrestreichweite (R0) übereinstimmt.

3. Verfahren nach einem der Ansprüche 1 bis 2, **gekennzeichnet durch** das Bestimmen des zu erreichenden Mindestladezustands (SoC1, SoC2) an dem mindestens einen Ladezwischenstopp (L1, L2) auf Basis einer Strecke zu einem nächsten Ladezwischenstopp oder zum Navigationsziel durch die Steuereinheit (14).

4. Verfahren nach einem der Ansprüche 1 bis 3, **gekennzeichnet durch** das Bestimmen des zu erreichenden Mindestladezustands auf Basis einer Ladegeschwindigkeit an dem mindestens einen Ladezwischenstopp (L1, L2) durch die Steuereinheit (14).

5. Verfahren nach einem der Ansprüche 1 bis 4, **gekennzeichnet durch** das Bestimmen einer Ladezeit (36) bis zum Erreichen des Mindestladezustands (SoC) an dem mindestens einen Ladezwischenstopp (L1, L2) auf Basis der Ladegeschwindigkeit (46) an dem mindestens einen Ladezwischenstopp (L), eines ermittelten Ankunftsladezustands (32) und des zu erreichenden Mindestladezustand (SoC) an dem mindestens einen Ladezwischenstopp durch die Steuereinheit (14).

6. Verfahren nach Anspruch 5, **gekennzeichnet durch** das Anzeigen der Ladezeit (36) und/oder des Ankunftsladezustands (32) und/oder des zu erreichenden Mindestladezustands (SoC) an dem mindestens einen Ladezwischenstopp (L) auf einem Display (16).

7. Verfahren nach einem der Ansprüche 1 bis 6, **gekennzeichnet durch** das Übermitteln eines Signals indikativ für das Erreichen des zu erreichenden Mindestladezustands (SoC) an dem mindestens einen Ladezwischenstopp an ein mobiles Endgerät (M).

8. Verfahren nach einem der vorherigen Ansprüche 1 bis 7, **gekennzeichnet durch** das Erfassen einer zu erreichenden Ladestopprestreichweite (LR0) an dem mindestens einen Ladezwischenstopp (L1, L2) und das Bestimmen der Navigationsroute durch die Steuereinheit (14) derart, dass das Kraftfahrzeug (100) an dem mindestens einen Ladezwischenstopp eine Restreichweite (LR) aufweist, welche mindestens der erfassten Ladestopprestreichweite (LR0) entspricht.

9. Verfahren nach einem der Ansprüche 1 bis 8, **gekennzeichnet durch** das zeitkontinuierliche Bestimmen der Navigationsroute oder durch das Bestimmen der Navigationsroute nach bestimmten Zeitabständen durch die Steuereinheit (14).

10. Vorrichtung (10) zur Reichweitenkontrolle für ein Kraftfahrzeug (100), umfassend eine Benutzerschnittstelle, ein Display (16) und eine Steuereinheit (14), wobei die Vorrichtung (10) dazu eingerichtet ist, das Verfahren gemäß einem der Ansprüche 1 bis 9 auszuführen.

11. Kraftfahrzeug (100), umfassend eine Vorrichtung (10) zur Reichweitenkontrolle nach Anspruch 10.

## Claims

1. Range control method for a motor vehicle (100), comprising:
- recording a navigation destination (N) via a user interface;
- recording a target remaining range (R0) to be reached at the navigation destination (N) via the user interface;
- a control unit (14) determining a navigation route to the navigation destination (N) via at least one charging stopover (L1, L2) by determining a minimum state of charge (SoC1, SoC2) to be reached of a battery (120) at the at least one charging stopover (L1, L2), in such a way that the motor vehicle (100) has, upon reaching the navigation destination, a remaining range (R) which corresponds at least to the recorded target remaining range (R0);
- the control unit (14) controlling a display (16) to display the navigation route on the display (16);
**characterized by**
- recording an additional charging stopover (LM) via the user interface, and the control unit (14) re-determining the navigation route via the additional charging stopover (LM) by determining a minimum state of charge (SoC) to be reached at the additional charging stopover (LM), in such a way that the motor vehicle has, upon reaching the navigation destination, a remaining range (R) which corresponds at least to the recorded target remaining range (R0); and
- presenting a graphical charge indicator (40) on the display (16) during the charging procedure at the at least one charging stopover (L1, L2) or the additional charging stopover (LM), wherein the charge indicator (40) comprises a moving state-of-charge object (42) indicative of the actual state of charge of the battery (120) and a charge target object (44) indicative of the minimum state of charge (SoC) to be reached,
- wherein the graphical charge indicator (40) further comprises an object indicative of a charge preset (43) of the user, wherein the object indicative of the charge preset (43) together with the charge target object (44) indicative of the minimum state of charge (SoC) to be reached is presented on a beam during the charging procedure, in order according to their SoC value, and the moving state-of-charge object (42) moves along the beam.

2. Method according to claim 1, **characterized by** the control unit (14) determining the navigation route to the navigation destination (N) in such a way that the motor vehicle (100) has, upon reaching the navigation destination, a remaining range (R) which matches the recorded target remaining range (R0).

3. Method according to either of claims 1 and 2, **characterized by** the control unit (14) determining the minimum state of charge (SoC1, SoC2) to be reached at the at least one charging stopover (L1, L2), on the basis of a distance to a subsequent charging stopover or to the navigation destination.

4. Method according to any of claims 1 to 3, **characterized by** the control unit (14) determining the minimum state of charge to be reached, on the basis of a charging speed at the at least one charging stopover (L1, L2).

5. Method according to any of claims 1 to 4, **characterized by** the control unit (14) determining a charging time (36) until the minimum state of charge (SoC) is reached at the at least one charging stopover (L1, L2), on the basis of the charging speed (46) at the at least one charging stopover (L), an ascertained arrival state of charge (32), and the minimum state of charge (SoC) to be reached at the at least one charging stopover.

6. Method according to claim 5, **characterized by** displaying, on a display (16), the charging time (36) and/or the arrival state of charge (32) and/or the minimum state of charge (SoC) to be reached at the at least one charging stopover (L).

7. Method according to any of claims 1 to 6, **characterized by** transmitting, to a mobile terminal (M), a signal indicative of reaching the minimum state of charge (SoC) to be reached at the at least one charging stopover.

8. Method according to any of the preceding claims 1 to 7, **characterized by** recording a charging stop remaining range (LR0) to be reached at the at least one charging stopover (L1, L2) and the control unit (14) determining the navigation route in such a way that the motor vehicle (100) has, at the at least one charging stopover, a remaining range (LR) which corresponds at least to the recorded charging stop remaining range (LR0).

9. Method according to any of claims 1 to 8, **characterized by** the control unit (14) continuously determining the navigation route or **by** said control unit determining the navigation route at determined time intervals.

10. Range control device (10) for a motor vehicle (100), comprising a user interface, a display (16) and a control unit (14), wherein the device (10) is configured to carry out the method according to any of claims 1 to 9.

11. Motor vehicle (100) comprising a range control device (10) according to claim 10.

## Revendications

1. Procédé de contrôle d'autonomie pour un véhicule automobile (100), comprenant :
- la détection d'une cible de navigation (N) par l'intermédiaire d'une interface utilisateur ;
- la détection d'une autonomie résiduelle de cible (R0) à atteindre au niveau de la cible de navigation (N) par l'intermédiaire de l'interface utilisateur ;
- la détermination d'un itinéraire de navigation vers la cible de navigation (N) par l'intermédiaire d'au moins un arrêt intermédiaire de charge (L1, L2) en déterminant un état de charge minimal (SoC1, SoC2) à atteindre d'une batterie (120) à l'au moins un arrêt intermédiaire de charge (L1, L2) par une unité de commande (14) de telle sorte que le véhicule automobile (100) présente, lorsque la cible de navigation est atteinte, une autonomie résiduelle (R) qui correspond au moins à l'autonomie résiduelle de cible (R0) détectée ;
- la commande d'un afficheur (16) par l'unité de commande (14) pour indiquer l'itinéraire de navigation sur l'afficheur (16) ;
**caractérisé par**
- la détection d'un arrêt intermédiaire de charge supplémentaire (LM) par l'intermédiaire de l'interface utilisateur, et la nouvelle détermination de l'itinéraire de navigation par l'unité de commande (14) par l'intermédiaire de l'arrêt intermédiaire de charge supplémentaire (LM) en déterminant un état de charge minimal (SoC) à atteindre à l'arrêt intermédiaire de charge supplémentaire (LM) de telle sorte que le véhicule automobile présente, lorsque la cible de navigation est atteinte, une autonomie résiduelle (R) qui correspond au moins à l'autonomie résiduelle de cible (R0) détectée ; et
- la représentation d'un indicateur de charge graphique (40) sur l'afficheur (16) pendant le processus de charge à l'au moins un arrêt intermédiaire de charge (L1, L2) ou à l'arrêt intermédiaire de charge supplémentaire (LM), dans lequel l'indicateur de charge (40) comprend un objet d'état de charge mobile (42) indiquant l'état de charge réel de la batterie (120) et un objet de cible de charge (44) indiquant l'état de charge minimal (SoC) à atteindre,
- dans lequel l'indicateur de charge graphique (40) comprend en outre un objet indiquant un préréglage de charge (43) de l'utilisateur, dans lequel l'objet indiquant le préréglage de charge (43) est représenté conjointement avec l'objet de cible de charge (44) indiquant l'état de charge minimal (SoC) à atteindre pendant le processus de charge sur un faisceau, ordonné selon sa valeur de SoC, et l'objet d'état de charge mobile (42) se déplace le long du faisceau.

2. Procédé selon la revendication 1, **caractérisé par** la détermination de l'itinéraire de navigation vers la cible de navigation (N) par l'unité de commande (14) de telle sorte que le véhicule automobile (100) présente, lorsque la cible de navigation est atteinte, une autonomie résiduelle (R) qui correspond à l'autonomie résiduelle de cible (R0) détectée.

3. Procédé selon l'une des revendications 1 à 2, **caractérisé par** la détermination par l'unité de commande (14) de l'état de charge minimal (SoC1, SoC2) à atteindre à l'au moins un arrêt intermédiaire de charge (L1, L2) sur la base d'un trajet vers un arrêt intermédiaire de charge suivant ou vers la cible de navigation.

4. Procédé selon l'une des revendications 1 à 3, **caractérisé par** la détermination par l'unité de commande (14) de l'état de charge minimal à atteindre sur la base d'une vitesse de charge au niveau de l'au moins un arrêt intermédiaire de charge (L1, L2).

5. Procédé selon l'une des revendications 1 à 4, **caractérisé par** la détermination par l'unité de commande (14) d'un temps de charge (36) avant d'atteindre l'état de charge minimal (SoC) à l'au moins un arrêt intermédiaire de charge (L1, L2) sur la base de la vitesse de charge (46) à l'au moins un arrêt intermédiaire de charge (L), d'un état de charge d'arrivée (32) établi et de l'état de charge minimal (SoC) à atteindre à l'au moins un arrêt intermédiaire de charge.

6. Procédé selon la revendication 5, **caractérisé par** l'indication sur un afficheur (16) du temps de charge (36) et/ou de l'état de charge à l'arrivée (32) et/ou de l'état de charge minimal (SoC) à atteindre à l'au moins un arrêt intermédiaire de charge (L).

7. Procédé selon l'une des revendications 1 à 6, **caractérisé par** la transmission à un terminal mobile (M) d'un signal indiquant l'atteinte de l'état de charge minimal (SoC) à atteindre à l'au moins un arrêt intermédiaire de charge.

8. Procédé selon l'une des revendications précédentes 1 à 7,
**caractérisé par** la détection d'une autonomie résiduelle d'arrêt de charge (LR0) à atteindre à l'au moins un arrêt intermédiaire de charge (L1, L2) et la détermination de l'itinéraire de navigation par l'unité de commande (14) de telle sorte que le véhicule automobile (100) présente à l'au moins un arrêt intermédiaire de charge une autonomie résiduelle (LR) qui correspond au moins à l'autonomie résiduelle d'arrêt de charge (LR0) détectée.

9. Procédé selon l'une des revendications 1 à 8, **caractérisé par** la détermination de l'itinéraire de navigation en continu dans le temps ou par la détermination de l'itinéraire de navigation selon des intervalles de temps déterminés par l'unité de commande (14).

10. Dispositif (10) permettant le contrôle d'autonomie pour un véhicule automobile (100) comprenant une interface utilisateur, un afficheur (16) et une unité de commande (14), dans lequel le dispositif (10) est destiné à mettre en œuvre le procédé selon l'une des revendications 1 à 9.

11. Véhicule automobile (100), comprenant un dispositif (10) permettant le contrôle d'autonomie selon la revendication 10.
